# EUROPEAN PATENT APPLICATION

(11) **EP 4 807 843 A1**
(43) Date of publication of application: **16.09.2026**
(21) Application number: 24960738.3
(22) Date of filing: 03.12.2024
(51) Int. Cl.: H01M 10/056, H01M 10/0525

(54) **SANDWICH-STRUCTURED POLYMER-BASED SOLID-STATE ELECTROLYTE, PREPARATION METHOD THEREFOR AND USE THEREOF**

(30) Priority: 12.11.2024 CN 202411614689
(71) Applicant: Zhongtian Energy Storage Technology Co., Ltd, Nantong, Jiangsu 226000 (CN); Jiangsu Zhongtian Technology Co., Ltd., Nantong, Jiangsu 226463 (CN)
(72) Inventor: YU, Yange, Nantong, Jiangsu 226000 (CN); XUE, Chi, Nantong, Jiangsu 226000 (CN); MIAO, Yonghua, Nantong, Jiangsu 226000 (CN); YANG, Wei, Nantong, Jiangsu 226000 (CN); LIU, Weigang, Nantong, Jiangsu 226000 (CN)
(74) Representative: Cameron Intellectual Property Ltd
(86) International application number: PCT/CN2024/136438
(87) International publication number: WO 2026/102832

(57) **Abstract**

The present invention provides a sandwich-structured polymer-based solid electrolyte, its preparation method, and applications. The sandwich-structured polymer-based solid electrolyte comprises a first solid electrolyte layer, a second solid electrolyte layer, and a third solid electrolyte layer located between the first and second solid electrolyte layers. The content of inorganic filler in the third solid electrolyte layer is higher than that in the first solid electrolyte layer; and also higher than that in the second solid electrolyte layer. The inorganic filler in the third solid electrolyte layer includes a first inorganic filler and a second inorganic filler, where the particle size of the first inorganic filler is smaller than that of the second inorganic filler. The invention helps to improve mechanical properties, effectively improves lithium dendrite problems, and enhance cycling performance and interface stability.

## Description

### Technical Field

The present invention relates to a sandwich-structured polymer-based solid electrolyte, a preparation method therefor and use thereof, belonging to the technical field of solid electrolyte.

### Background Art

Recently, quality and safety issues have become prominent in the new energy industry. For example, energy storage power stations in South Korea suffer fires and explosions several times, so that the energy storage industry in South Korea has been shutdown for rectification for several times. Also, energy storage power stations in the United States have caught fire, which had a significant impact on American society and industry. For the liquid electrolytes, 80% of the components thereof are flammable organic solvents, which pose serious safety hazards to batteries, such as lithium-ion batteries. However, solid-state batteries do not have free electrolytes, exhibit significant advantages and potential in safety performance, and represent an inevitable path for battery development.

The core of a solid-state battery is solid electrolyte. Among them, polymer solid electrolytes offer advantages such as good flexibility and excellent interfacial contact, while oxide solid electrolytes are favored for their high ionic conductivity, both showing promising application prospects. However, the low conductivity of polymer solid electrolytes and the brittleness of oxide solid electrolytes limit the practical use of these two types of solid electrolytes. Combining polymer solid-state electrolyte and oxide solid-state electrolyte to fabricate composite solid-state electrolytes has emerged a new research direction. However, such composite solid-state electrolytes still face challenges, including difficulty in controlling, and the inability of single-layer polymer/oxide composite electrolytes to simultaneously meet requirements for flexibility, mechanical properties, and ion conductivity, which further affects the electrical performance of solid-state batteries, such as interfacial contact and cycle life.

Therefore, there is an urgent need to develop a solid electrolyte that can improve performances such as interfacial contact and cycle life.

### Summary of the Invention

The present invention provides a sandwich-structured polymer-based solid electrolyte, a preparation method therefor and use thereof. The sandwich-structured polymer-based solid electrolyte has high mechanical properties, so the lithium dendrite problem has been improved, as is conducive to improving cycle performance and interface issues.

The present invention provides a sandwich-structured polymer-based solid electrolyte, comprising a first solid electrolyte layer, a second solid electrolyte layer, and a third solid electrolyte layer located between the first solid electrolyte layer and the second solid electrolyte layer; the inorganic filler content of third solid electrolyte layer is higher than the inorganic filler content of the first solid electrolyte layer; the inorganic filler content of the third solid electrolyte layer is higher than the inorganic filler content of the second solid electrolyte layer; the inorganic filler in the third solid electrolyte layer includes a first inorganic filler and a second inorganic filler, the first inorganic filler has a particle size smaller than the particle size of the second inorganic filler.

Optionally, the ratio of the particle size of the first inorganic filler to the particle size of the second inorganic filler is 1:(1~1000), and the ratio of the particle size of the first inorganic filler to the particle size of the second inorganic filler is not 1.

Optionally, the particle size of the first inorganic filler is 10~500 nm, and the particle size of the second inorganic filler is 1~10 µm.

Optionally, the mass ratio of the first inorganic filler to the second inorganic filler is (1~2):(2~10).

Optionally, the first solid electrolyte layer comprises, by mass percentage, 40% to 100% of a first polymer, 0% to 60% of inorganic filler, and 1% to 10% of a first lithium salt; the second solid electrolyte layer comprises, by mass percentage, 40% to 100% of a third polymer, 0% to 60% of inorganic filler, and 1% to 10% of a third lithium salt; the third solid electrolyte layer comprises, by mass percentage, 25% to 100% of a second polymer, 0% to 75% of inorganic filler, and 1% to 10% of a second lithium salt.

Optionally, the inorganic filler includes one or more of lithium aluminum titanium phosphorus oxide, lithium lanthanum zirconium oxide, lithium lanthanum titanium oxide, lithium lanthanum zirconium titanium oxide, alumina, silicon oxide, hafnium oxide, and barium titanate; and/or, the first inorganic filler and the second inorganic filler each independently include one or more of alumina, silicon oxide, hafnium oxide, and barium titanate.

The present invention also provides a preparation method for the sandwich-structured polymer-based solid electrolyte as described above, comprising: mixing the first polymer, the inorganic filler, the first lithium salt, and a first solvent, and then performing a first grinding to obtain a first solid electrolyte slurry; coating the first solid electrolyte slurry onto a substrate, and then performing a first drying to obtain a first solid electrolyte layer; mixing the second polymer, the inorganic filler, the second lithium salt, and a second solvent, and then performing a second grinding to obtain a second solid electrolyte slurry; coating the second solid electrolyte slurry onto the substrate, and then performing a second drying to obtain the second solid electrolyte layer; and mixing the third polymer, the first inorganic filler, the second inorganic filler, the third lithium salt, and a third solvent to obtain a third solid electrolyte slurry; coating the third solid electrolyte slurry onto the substrate, and then performing a third drying to obtain the third solid electrolyte layer; the sum of the addition amounts of the first inorganic filler and the second inorganic filler is higher than the addition amount of inorganic filler in the first solid electrolyte layer, and the sum of the addition amounts of the first inorganic filler and the second inorganic filler is higher than the addition amount of the inorganic filler in the second solid electrolyte layer; sequentially stacking the first solid electrolyte layer, the third solid electrolyte layer, and the second solid electrolyte layer and pressing them at 80~120MPa and 160~200°C to obtain the sandwich-structured polymer-based solid electrolyte.

Optionally, during the first grinding process, the grinding is first performed at a rotation speed of 80-120 rpm for 8-12 minutes, then the grinding is performed at a rotation speed of 480-520 rpm for 18-22 minutes, and finally the grinding is performed at a rotation speed of 780-820 rpm for 38-42 minutes; and/or, the process of "coating the first solid electrolyte slurry onto the substrate, and then performing a first drying to obtain the first solid electrolyte layer" includes: removing air bubbles from the first solid electrolyte slurry, and then coating 8~12 mL of the first solid electrolyte slurry. air bubbles of which have been removed, onto the substrate with a planar area of 380-420 cm², and performing the first drying at 58~62°C to obtain the first solid electrolyte layer; and/or, during the second grinding process, the grinding is first performed at a rotation speed of 80~120 rpm for 8~12 minutes, then the grinding is performed at a rotation speed of 480~520 rpm for 18-22 minutes, and finally the grinding is performed at a rotation speed of 780~820 rpm for 38~42 minutes; and/or, the process of "coating the second solid electrolyte slurry onto the substrate, and then performing the second drying to obtain the second solid electrolyte layer" includes: removing air bubbles from the second solid electrolyte slurry, and then coating 8~12 mL of the second solid electrolyte slurry, air bubbles of which have been removed, onto the substrate with a planar area of 380~420 cm², performing the second drying at 58~62°C to obtain the second solid electrolyte layer; and/or, the process of "coating the third solid electrolyte slurry onto the substrate, and then performing a third drying to obtain the third solid electrolyte layer" includes: removing air bubbles from the third solid electrolyte slurry, and then coating 8~12 mL of the third solid electrolyte slurry, air bubbles of which have been removed, onto the substrate with a planar area of 380~420 cm², and performing the second drying at 58~62°C to obtain the third solid electrolyte layer.

Optionally, the first polymer, the second polymer, and the third polymer each independently comprise one or more of polyvinylidene fluoride, polyvinylidene fluoride-hexafluoropropylene copolymer, polyvinylidene fluoride-trifluoroethylene-chlorotrifluoroethylene terpolymer, and polyvinylidene fluoride-trifluoroethylene copolymer; and/or, the first lithium salt, the second lithium salt, and the third lithium salt each independently comprise one or more of lithium bis(trifluoromethanesulfonyl)imide and lithium hexafluorophosphate.

The present invention also provides a solid-state battery comprising the sandwich-structured polymer-based solid electrolyte as described above or the sandwich-structured polymer-based solid electrolyte obtained according to the preparation method described above.

The sandwich-structured polymer-based solid electrolyte, the preparation method therefor and use thereof provided by the present invention have high mechanical properties and high density, effectively improving the lithium dendrite problem, and have controllable thickness, low thermal shrinkage, and high ionic conductivity, effectively solving the interface problem and improving cycle performance.

### Description of Drawings

FIG. 1 shows the discharge energy retention rate curve of the solid-state battery of Example 1;
FIG. 2 shows the discharge energy retention rate curve of the solid-state battery of Example 2;
FIG. 3 shows the discharge energy retention rate curve of the solid-state battery of Example 3;
FIG. 4 shows the discharge energy retention rate curve of the solid-state battery of Comparative Example 1;
FIG. 5 shows the discharge energy retention rate curve of the solid-state battery of Comparative Example 2;
FIG. 6 shows the discharge energy retention rate curve of the solid-state battery of Comparative Example 3; and
FIG. 7 is a schematic structural diagram of the sandwich-structured polymer-based solid electrolyte in some examples.

### Detailed Description of Embodiments

To make the objectives, technical solutions, and advantages of the present invention clearer, the technical solutions in the examples of the present invention will be clearly and completely described below in conjunction with the examples of the present invention. Obviously, the described examples are only some examples of the present invention, not all examples. Based on the examples of the present invention, all other examples obtained by those of ordinary skills in the art without creative labor fall into the protection scope of the present invention.

An example of the present invention provides a sandwich-structured polymer-based solid electrolyte, comprising a first solid electrolyte layer, a second solid electrolyte layer, and a third solid electrolyte layer located between the first solid electrolyte layer and the second solid electrolyte layer; the inorganic filler content of the third solid electrolyte layer is higher than the inorganic filler content of the first solid electrolyte layer; the inorganic filler content of the third solid electrolyte layer is higher than the inorganic filler content of the second solid electrolyte layer; the inorganic filler in the third solid electrolyte layer includes a first inorganic filler and a second inorganic filler, and the first inorganic filler has a particle size smaller than the particle size of the second inorganic filler.

According to the inventors' research and analysis: the third solid electrolyte layer of the sandwich-structured polymer-based solid electrolyte contains more inorganic fillers, that is, the middle solid electrolyte layer contains more inorganic fillers, which helps to enhance the mechanical properties of the sandwich-structured polymer-based solid electrolyte and inhibit lithium dendrites from piercing the electrolyte; and the first solid electrolyte layer and the second solid electrolyte layer contain less inorganic fillers, that is, the solid electrolyte layers on both sides contain less inorganic fillers, which helps to improve the interfacial contact between the solid electrolyte and the positive and negative electrodes; in addition, the third solid electrolyte layer (the middle layer) includes two kinds of inorganic fillers with different particle sizes (the first filler and the second filler), the inorganic filler with smaller particle size can fill the gaps between the inorganic filler with larger particle size, which can reduce the probability of lithium dendrites piercing through the gaps and can further enhance the mechanical properties of the solid electrolyte, prevent lithium dendrites from penetrating the solid electrolyte, thereby preventing occurrence of short circuit and improving cycle performance.

Therefore, the sandwich-structured polymer-based solid electrolyte provided in this example of the present invention exhibits high mechanical properties, and effectively improves the lithium dendrite problem, as is conducive to to improving cycle performance and interface issues.

The ratio of the particle size of the first inorganic filler to the particle size of the second inorganic filler can be 1:(1~1000), and the ratio of the particle size of the first inorganic filler to the particle size of the second inorganic filler is not 1.

Furthermore, the ratio of the particle size of the first inorganic filler to the particle size of the second inorganic filler can be (1~50):(100~1000), for example, 1:100, 10:200, 15:400, 20:500, 40:700, 1:1000. The inorganic filler with smaller particle size can fill the gaps between the inorganic filler with larger particle size, which can reduce the probability of lithium dendrites piercing through the gaps and can further enhance the mechanical properties of the solid electrolyte, prevent lithium dendrites from penetrating the solid electrolyte, thereby preventing occurrence of short circuit and improving cycle performance.

In some examples, the particle size of the first inorganic filler is 10~500 nm, for example, 10 nm, 20 nm, 50 nm, 100 nm, 200 nm, 300 nm, 400 nm, 500 nm, or in the range formed by any two of them; the particle size of the second inorganic filler is 1~10 µm, for example, 1 µm, 5 µm, 8 µm, 10 µm, or in the range formed by any two of them. The inorganic filler with smaller particle size can fill the gaps between the inorganic filler with larger particle size, which can reduce the probability of lithium dendrites piercing through the gaps and can further enhance the mechanical properties of the solid electrolyte, prevent lithium dendrites from penetrating the solid electrolyte, thereby preventing occurrence of short circuit and improving cycle performance.

The mass ratio of the first inorganic filler to the second inorganic filler can be (1~2):(2~10), for example, 1:1, 1:2, 1:5, 1:10, or in the range formed by any two of them. The inorganic filler with smaller particle size can fill the gaps between the inorganic filler with larger particle size, which can reduce the probability of lithium dendrites piercing through the gaps and can further enhance the mechanical properties of the solid electrolyte, prevent lithium dendrites from penetrating the solid electrolyte, thereby preventing occurrence of short circuit and improving cycle performance.

In some examples, the first solid electrolyte layer comprises, by mass percentage, 40%~100% of a first polymer, 0%~60% of the inorganic filler, and 1%~10% of a first lithium salt.

The aforementioned first polymer may include one or more of polyvinylidene fluoride (PVDF), polyvinylidene fluoride-hexafluoropropylene copolymer (PVDF-HFP), polyvinylidene fluoride-trifluoroethylene-chlorotrifluoroethylene terpolymer (P(VDF-TrFE-CTFE)), and polyvinylidene fluoride-trifluoroethylene copolymer (P(VDF-TrFE)). In specific implementations, the polymer which is the same as the binder in the electrode plate (e.g., the positive electrode plate) can be selected, which helps improve interfacial contact problem and increase ionic conductivity. Among them, P(VDF-TrFE-CTFE) has a high dielectric constant, provides lithium-ion percolation channels and improves ionic conductivity, while also possesses strong mechanical properties, suppresses lithium dendrite penetration, and helps to improve cycle performance.

In the following, the inorganic filler in the first solid electrolyte layer is referred to as the third inorganic filler, and the third inorganic filler may include one or more of lithium aluminum titanium phosphate oxide (LATP), lithium lanthanum zirconium oxide (LLZO), lithium lanthanum titanium oxide (LLTO), and lithium lanthanum zirconium titanium oxide (LLZTO).

The aforementioned first lithium salt may include one or more of lithium bis(trifluoromethanesulfonyl)imide (LiTFSI) and lithium hexafluorophosphate.

Furthermore, in the first lithium salt, the mass ratio of lithium bis(trifluoromethanesulfonyl)imide (LiTFSI) to lithium hexafluorophosphate may be 10:(3~4), for example, 10:3, 10:3.2, 10:3.5, 10:4, or in the range formed by any two of them.

In some examples, the second solid electrolyte layer comprises, by mass percentage, 40%~100% of a second polymer, 0%~60% of the inorganic filler, and 1%~10% of a second lithium salt.

The aforementioned second polymer may include one or more of polyvinylidene fluoride (PVDF), polyvinylidene fluoride-hexafluoropropylene copolymer (PVDF-HFP), polyvinylidene fluoride-trifluoroethylene-chlorotrifluoroethylene terpolymer (P(VDF-TrFE-CTFE)), and polyvinylidene fluoride-trifluoroethylene copolymer (P(VDF-TrFE)). During implementations, a polymer with good bonding to the electrode plate (e.g., the negative electrode plate) can be selected, which helps improve interfacial contact and increase ionic conductivity. Among them, P(VDF-TrFE-CTFE) has a high dielectric constant, providing lithium-ion percolation channels and improving ionic conductivity, and also possesses strong mechanical properties, inhibiting lithium dendrite penetration, and helping to improve cycle performance.

Hereinafter, the inorganic filler in the second solid electrolyte layer is referred to as the fourth inorganic filler, and the fourth inorganic filler may include one or more of alumina, silicon oxide, and hafnium oxide.

The aforementioned second lithium salt may include one or more of lithium bis(trifluoromethanesulfonyl)imide (LiTFSI) and lithium hexafluorophosphate.

Furthermore, in the second lithium salt described above, the mass ratio of lithium bis(trifluoromethanesulfonyl)imide (LiTFSI) to lithium hexafluorophosphate can be 10:(3~4), for example, 10:3, 10:3.2, 10:3.5, 10:4, or in a range formed by any two of them.

In some examples, the third solid electrolyte layer comprises, by mass percentage, 25%~100% of a third polymer, 0%~75% of the inorganic filler (including the first inorganic filler and the second inorganic filler), and 1%~10% of a third lithium salt.

The aforementioned third polymer may include one or more of polyvinylidene fluoride (PVDF), polyvinylidene fluoride-hexafluoropropylene copolymer (PVDF-HFP), polyvinylidene fluoride-trifluoroethylene-chlorotrifluoroethylene terpolymer (P(VDF-TrFE-CTFE)), and polyvinylidene fluoride-trifluoroethylene copolymer (P(VDF-TrFE)). Among them, P(VDF-TrFE-CTFE) has a high dielectric constant, providing lithium-ion percolation channels and improving ionic conductivity, and also possesses strong mechanical properties, inhibiting lithium dendrite penetration and helping to improve cycle performance.

The first inorganic filler and the second inorganic filler each independently include one or more of alumina (Al₂O₃), silicon oxide, and hafnium oxide.

The third lithium salt may include one or more of lithium bis(trifluoromethanesulfonyl)imide (LiTFSI) and lithium hexafluorophosphate.

Furthermore, in the second lithium salt described above, the mass ratio of lithium bis(trifluoromethanesulfonyl)imide (LiTFSI) to lithium hexafluorophosphate can be 10:(3~4), for example, 10:3, 10:3.2, 10:3.5, 10:4, or in a range formed by any two of them.

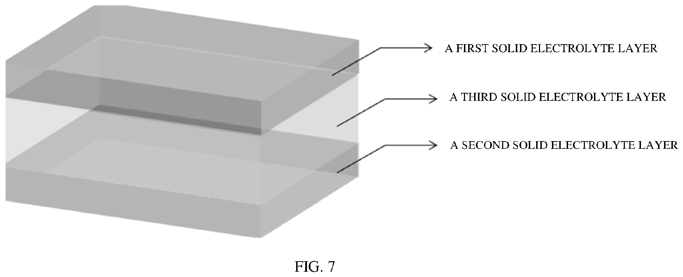

FIG. 7 is a schematic structural diagram of the sandwich-structured polymer-based solid electrolyte in some examples.

An example of the present invention also provides a preparation method for the above-described sandwich-structured polymer-based solid electrolyte, comprising: mixing the first polymer, the inorganic filler, the first lithium salt, and a first solvent, and then performing a first grinding to obtain a first solid electrolyte slurry; coating the first solid electrolyte slurry onto a substrate, and then performing a first drying to obtain a first solid electrolyte layer; mixing the second polymer, the inorganic filler, the second lithium salt, and a second solvent, and then performing a second grinding to obtain a second solid electrolyte slurry; coating the second solid electrolyte slurry onto the substrate, and then performing a second drying to obtain a second solid electrolyte layer; mixing the third polymer, the first inorganic filler, the second inorganic filler, the third lithium salt, and a third solvent to obtain a third solid electrolyte slurry; coating the third solid electrolyte slurry onto the substrate, performing a third drying to obtain the third solid electrolyte layer; the sum of the addition amounts of the first inorganic filler and the second inorganic filler is higher than the addition amount of the inorganic filler in the first solid electrolyte layer, and the sum of the addition amounts of the first inorganic filler and the second inorganic filler is higher than the addition amount of the inorganic filler in the second solid electrolyte layer; sequentially stacking the first solid electrolyte layer, the third solid electrolyte layer, and the second solid electrolyte layer and pressing them at 80~120MPa and 160~200°C to obtain the sandwich-structured polymer-based solid electrolyte.

According to the inventors' research and analysis: adding more inorganic filler to the third solid electrolyte layer (the middle layer) of the sandwich-structured polymer-based solid electrolyte helps enhance the mechanical properties of the sandwich-structured polymer-based solid electrolyte and inhibits lithium dendrites from piercing the electrolyte. Adding less inorganic filler to the first solid electrolyte layer and the second solid electrolyte layer (two side layers), i.e., the solid electrolyte layers on both sides contain less inorganic filler, which helps to improve the interfacial contact between the solid electrolyte and the positive and negative electrodes and improve ionic conductivity. The third solid electrolyte layer (the middle layer) includes two kinds of inorganic fillers with different particle sizes (the first filler and the second filler), the inorganic filler with smaller particle size can fill the gaps between the inorganic filler with larger particle size, as can reduce the probability of lithium dendrites piercing through the gaps and further enhance the mechanical properties of solid electrolytes, preventing lithium dendrites from penetrating the solid electrolyte, thereby preventing occurrence of short circuit and improving cycle performance (cycle life). In addition, in the above preparation method, three electrolyte layers are obtained through coating (solution casting or pouring), and then the three electrolyte layers are stacked and pressed (folded hot-pressing) to obtain the sandwich-structured polymer-based solid electrolyte (organic-inorganic hybrid polymer electrolyte or film) with a thickness of 5~50µm by controlling the coating amounts and the contents of the polymer (organic polymer) and the inorganic filler. This facilitates the control of the thickness of the sandwich-structured polymer-based solid electrolyte and makes it easier to further reduce the thickness of the sandwich-structured polymer-based solid electrolyte, thereby simultaneously solving the problems of difficult thickness control and interface issues of solid electrolytes.

In some examples, the first solvent mentioned above includes N-methylpyrrolidone and/or dimethylformamide (DMF) and dimethylacetamide (DMAc).

In some examples, during the first grinding process, the grinding is performed first at a rotation speed of 80 to 120 rpm, for example, 80 rpm, 90 rpm, 100 rpm, 110 rpm, 120 rpm, or a range formed by any two of them, for 8~12 minutes, for example, 8 minutes, 9 minutes, 10 minutes, 11 minutes, 12 minutes, or a range formed by any two of them, then the grinding is performed at a rotation speed of 480 to 520 rpm, for example, 480 rpm, 490 rpm, 500 rpm, 510 rpm, 520 rpm, or a range formed by any two of them, for 18~22 minutes, for example, 18 minutes, 19 minutes, 20 minutes, 21 minutes, 22 minutes, or a range formed by any two of them, and finally the grinding is performed at a rotation speed of 780 to 820 rpm, e.g. 780 rpm, 790 rpm, 800 rpm, 810 rpm, 820 rpm, or a range formed by any two of them, for 38 to 42 minutes, e.g., 38 minutes, 39 minutes, 40 minutes, 41 minutes, 42 minutes, or a range formed by any two of them. Initial grinding at a lower speed helps to disperse the material, then grinding at a higher speed further refines the material to obtain a viscous first solid electrolyte slurry, which helps improve the mechanical properties of the sandwich-structured polymer-based solid electrolyte, as well as improves interface issues and cycle performance.

During implementations, first adding the first polymer, the inorganic filler (referred to as the third inorganic filler), and first lithium salt that have been weighted to a ball mill jar, then using a pipette to add a certain volume of the first solvent to the ball mill jar to perform the first grinding described above, so as to obtain the first solid electrolyte slurry.

The energy density of most solid electrolytes is lower than expected, mainly due to the excessive thickness and weight of the solid electrolytes. Current methods for preparing polymer electrolytes primarily involve the method of pouring to form film and coating method. However, it is difficult for these two methods to precisely control the thickness of the polymer electrolyte (film). Some polymer electrolytes are too thin, resulting in poor mechanical properties, leading to lithium dendrite penetration and affecting battery cycle life. Conversely, excessively thick polymer electrolytes (films) increase the lithium-ion shuttle path, significantly reducing ionic conductivity and preventing battery cycling at room temperature, while also increasing battery weight and cost.

In some examples, the process of coating the first solid electrolyte slurry onto a substrate and then performing a first drying to obtain a first solid electrolyte layer includes: removing air bubbles from the first solid electrolyte slurry, and then coating 8~12 mL of the first solid electrolyte slurry, air bubbles of which have been removed, onto the substrate with a planar area of 380~420 cm², and performing the first drying at 58~62°C to obtain the first solid electrolyte layer. For example, the volume of the first solid electrolyte slurry, air bubbles of which have been removed, may be 8 mL, 9 mL, 10 mL, 11 mL, 12 mL, or in a range formed by any two of them; the planar area of the substrate may be 380 cm², 390 cm², 400 cm², 410 cm², or 420 cm²; and the temperature for the first drying may be 58 °C, 60°C, 62°C, or in a range formed by any two of them. Adjusting the coating amount helps to flexibly control the thickness of the first solid electrolyte layer, thereby controlling the sandwich-structured polymer-based solid electrolyte.

During implementations, a vacuum filter may be used to filter the first solid electrolyte slurry at least twice, with each filtration time being 20±5 minutes, to remove air bubbles from the first solid electrolyte slurry, then a graduated cylinder is used to take (or draw with dropper) a certain volume of the first solid electrolyte slurry, air bubbles of which have been removed, and pour it onto the substrate, and after the first solid electrolyte slurry automatically spreads onto the entire substrate, the substrate is placed in a vacuum oven for the first drying to obtain the first solid electrolyte layer.

In some examples, the second solvent includes N-methylpyrrolidone and/or dimethylformamide, dimethylacetamide (DMAc).

In some examples, during the second grinding process described above, the grinding is first performed at a rotation speed of 80 to 120 rpm, for example, 80 rpm, 90 rpm, 100 rpm, 110 rpm, 120 rpm, or a range formed by any two of them, for 8~12 minutes, for example, 8 minutes, 9 minutes, 10 minutes, 11 minutes, 12 minutes, or a range formed by any two of them, the grinding is then performed at a rotation speed of 480 to 520 rpm, for example, 480 rpm, 490 rpm, 500 rpm, 510 rpm, 520 rpm, or a range formed by any two of them, for 18~22 minutes, for example, 18 minutes, 19 minutes, 20 minutes, 21 minutes, 22 minutes, or a range formed by any two of them, and finally the grinding is performed at a rotation speed of 780 to 820 rpm, for example 780 rpm, 790 rpm, 800 rpm, 810 rpm, 820 rpm, or a range formed by any two of them, for 38~42 minutes, for example 38 minutes, 39 minutes, 40 minutes, 41 minutes, 42 minutes, or a range formed by any two of them. Initial grinding at a lower speed helps to disperse the material, and then grinding at a higher speed further refines the material, resulting in a viscous second solid electrolyte slurry. This process helps to improve the mechanical properties of the sandwich-structured polymer-based solid electrolyte, as well as improve interface problems and cycle performance.

During implementations, the second polymer, the inorganic filler (referred to as the fourth inorganic filler), and the second lithium salt that have been pre-weighted are added to a ball mill jar, then a pipette is used to add a certain volume of the second solvent to the ball mill jar to perform the second grinding described above, obtaining the second solid electrolyte slurry.

In some examples, the process of coating the second solid electrolyte slurry onto the substrate and then performing a second drying to obtain a second solid electrolyte layer includes: removing air bubbles from the second solid electrolyte slurry, coating 8~12 mL of the second solid electrolyte slurry, air bubbles of which have been removed, onto the substrate with a planar area of 380~420cm², and then performing the second drying at 58~62°C to obtain the second solid electrolyte layer. For example, the volume of the second solid electrolyte slurry, air bubbles of which have been removed, may be 8 mL, 9 mL, 10 mL, 11 mL, 12 mL, or in a range formed by any two of them; the planar area of the substrate may be 380 cm², 390 cm², 400 cm², 410 cm², 420 cm²; and the temperature for the second drying may be 58°C, 60°C, 62°C, or in a range formed by any two of them. Adjusting the coating amount helps to flexibly control the thickness of the second solid electrolyte layer, thereby controlling the sandwich-structured polymer-based solid electrolyte.

During implementations, a vacuum filter may be used to filter the second solid electrolyte slurry at least twice, with each filtration time being 20±5 minutes, to remove air bubbles from the second solid electrolyte slurry, then a graduated cylinder is used to take a certain volume of the second solid electrolyte slurry, air bubbles of which have been removed, and pour it onto the substrate, and after the second solid electrolyte slurry automatically spreads onto the entire substrate, the substrate is placed in a vacuum oven for the second drying to obtain the second solid electrolyte layer.

In some examples, the third solvent includes N-methylpyrrolidone and/or dimethylformamide, dimethylacetamide (DMAc).

During the process of mixing the third polymer, the first inorganic filler, the second inorganic filler, the third lithium salt, and the third solvent to obtain the third solid electrolyte slurry, the mixture can be stirred to realize uniform mixing. For example, the mixture can be placed in a glass bottle and stirred with a thermostatic magnetic stirrer to obtain a viscous third solid electrolyte slurry, wherein the temperature for stirring may be 48~52°C, for example 48°C, 50°C, 52°C or in a range formed by any two of them.

In some examples, the process of coating the above-mentioned third solid electrolyte slurry onto the substrate and performing the third drying to obtain the third solid electrolyte layer includes: removing air bubbles from the third solid electrolyte slurry, coating 8~12 mL of the third solid electrolyte slurry, air bubbles of which have been removed, onto the substrate with a planar area of 380~420 cm², and then performing the second drying at 58~62°C to obtain the third solid electrolyte layer. For example, the volume of the third solid electrolyte slurry, air bubbles of which have been removed, may be 8 mL, 9 mL, 10 mL, 11 mL, 12 mL, or in a range formed by any two of them; the planar area of the substrate may be 380 cm², 390 cm², 400 cm², 410 cm², 420 cm²; the temperature for the third drying may be 58°C, 60°C, 62°C, or in a range formed by any two of them. Adjusting the coating amount helps to flexibly control the thickness of the third solid electrolyte layer, thereby controlling the sandwich-structured polymer-based solid electrolyte.

During implementations, a vacuum filter may be used to filter the third solid electrolyte slurry at least twice, with each filtration time being 20±5 minutes, to remove air bubbles from the third solid electrolyte slurry, then a graduated cylinder is used to take a certain volume of the third solid electrolyte slurry, air bubbles of which have been removed, and pour it onto the substrate, and after the third solid electrolyte slurry automatically spreads onto the entire substrate, the substrate is placed in a vacuum oven for the third drying, to obtain the third solid electrolyte layer.

In some examples, the substrate mentioned above includes a glass plate, such as an ultra-flat glass plate with a length of 20±1 cm and a width of 20±1 cm.

For example, the pressure for the pressing process may be 80 MPa, 90 MPa, 100 MPa, 110 MPa, 120 MPa, or in a range formed by any two of them; the temperature for the pressing process may be 160°C, 170°C, 180°C, 190°C, 200°C, or in a range formed by any two of them. This facilitates flexible control of the thickness of the sandwich-structured polymer-based solid electrolyte.

During implementations, the first solid electrolyte layer, the third solid electrolyte layer, and the second solid electrolyte layer may be sequentially stacked in a specially designed mold and pressed at 80~120 MPa and 160~200°C for 40-50 minutes, for example, 40 minutes, 45 minutes, 50 minutes, or a range formed by any two of them. After cooling, the sandwich-structured polymer-based solid electrolyte is obtained.

The specially designed mold described above may be made of manganese steel, which has the characteristic of small deformation. The specially designed mold may have three portions: a square base, a square frame, and a square cover, wherein the square cover has a groove with a height of 15~50 µm.

An example of the present invention also provides a solid-state battery, including the above-described sandwich-structured polymer-based solid electrolyte or the sandwich-structured polymer-based solid electrolyte obtained by the above preparation method.

During implementation, the aforementioned solid-state battery may be a semi-solid-state battery, a quasi-solid-state battery, or an all-solid-state battery, such as a semi-solid-state lithium-ion battery, a semi-solid-state sodium-ion battery, a quasi-solid-state lithium-ion battery, a quasi-solid-state sodium-ion battery, an all-solid-state lithium-ion battery, or an all-solid-state sodium-ion battery.

It is conceivable that the solid-state battery of this example of the present invention, in addition to the aforementioned sandwich-structured polymer-based solid electrolyte, also includes a negative electrode plate and a positive electrode plate.

The examples of the present invention do not strictly limit the negative electrode active material in the negative electrode plate, which may be a negative electrode active material commonly used in current lithium-ion batteries, such as at least one of graphite, hard carbon, soft carbon, silver-carbon mesophase carbon microspheres, silicon-based negative electrode materials (mainly including silicon monooxide and silicon-carbon negative electrode), and tin-based negative electrode materials (mainly including tin and tin alloys).

The examples of the present invention do not strictly limit the positive electrode active material in the positive electrode plate, which may be the positive electrode active materials commonly used in current lithium-ion batteries, for example at least one compound oxide of lithium with cobalt, manganese, nickel, or combination thereof. Specifically, it may be at least one of lithium cobalt oxide, lithium nickel oxide, lithium manganese oxide, lithium manganese oxide, nickel-cobalt-manganese ternary material, nickel-cobalt-aluminum ternary material, lithium iron phosphate (LFP), lithium nickel manganese oxide, lithium-rich manganese-based material, etc.

In the preparation of solid-state battery, the positive electrode plate, the sandwich-structured polymer-based solid electrolyte, and the negative electrode plate are stacked, pressed, and packaged in an aluminum pouch. A gel electrolyte can be added for in-situ curing to complete the preparation of solid-state battery.

The present invention will be described in more detail below through specific examples.

The sources of some raw materials used in the examples are as follows:
Polyvinylidene fluoride (PVDF), polyvinylidene fluoride-hexafluoropropylene copolymer (PVDF-HFP), polyvinylidene fluoride-trifluoroethylene-chlorotrifluoroethylene terpolymer (P(VDF-TrFE-CTFE)), and polyvinylidene fluoride-trifluoroethylene copolymer (P(VDF-TrFE)): purchased from Aucma.

### Example 1

This example provides a preparation method for the sandwich-structured polymer-based solid electrolyte, comprising:
Adding 2.5g P(VDF-TrFE-CTFE), 2.5g LATP, and 0.25g LiTFSI into a ball mill jar; using a pipette to take 50mL of DMF and add it into the ball mill jar for mixing, then performing ball milling on the mixture respectively at 100rpm, 500rpm, and 800rpm for 10 minutes, 20 minutes, and 40 minutes respectively to obtain the first solid electrolyte slurry; using a vacuum filter to filter the first solid electrolyte slurry twice with each filtration time being 20 minutes to remove air bubbles from the first solid electrolyte slurry; using a graduated cylinder to take 10 mL of the first solid electrolyte slurry, air bubbles of which have been removed, and coat it onto the ultra-flat glass plate with a length of 20 cm and a width of 20 cm, which is placed into the vacuum oven for drying at 60°C after the solution automatically spreads across the entire ultra-flat glass plate, to obtain the first solid electrolyte layer.

Adding 2.5g P(VDF-TrFE-CTFE), 2.5g Al₂O₃, and 0.25g LiTFSI to a ball mill jar, using a pipette to take 50mL of DMF and add it to the ball mill jar for mixing, and then performing ball grinding on the mixture at 100rpm, 500rpm, and 800rpm for 10 minutes, 20 minutes, and 40 minutes, respectively, to obtain the second solid electrolyte slurry; using the vacuum filter to filter the second solid electrolyte slurry twice with each filtration time being 20 minutes to remove air bubbles from the second solid electrolyte slurry; and using a graduated cylinder to take 10 mL of the second solid electrolyte slurry, air bubbles of which have been removed, and coat it onto the ultra-flat glass plate with a length of 20 cm and a width of 20 cm, which is placed into the vacuum oven for drying at 60°C after the solution automatically spreads across the entire ultra-flat glass plate, to obtain the second solid electrolyte layer.

Adding 2.5g of P(VDF-TrFE-CTFE), 2.5g of Al₂O₃ with a particle size of 300 nm, 2.5g of Al₂O₃ with a particle size of 5,000 nm, and 0.25g of LiTFSI to a glass bottle, using a pipette to take 50mL of DMF to the glass bottle for mixing, and then performing constant-temperature magnetic stirring at 50 °C to obtain the third solid electrolyte slurry; using a vacuum filter to filter the third solid electrolyte slurry twice with each filtration time being 20 minutes to remove air bubbles from the third solid electrolyte slurry; using a graduated cylinder to take 10mL of the third solid electrolyte slurry, air bubbles of which have been removed, and coat it onto the 20cm x 20cm ultra-flat glass plate, which is placed into the vacuum oven and dried at 60°C after the solution automatically spreads across the entire ultra-flat glass plate, to obtain the third solid electrolyte layer.

The first solid electrolyte layer, the third solid electrolyte layer and the second solid electrolyte layer are sequentially stacked and then pressed at 100 MPa and 180 °C for 45 minutes to obtain a sandwich-structured polymer-based solid electrolyte (P(VDF-TrFE-CTFE)/LATP/LiTFSI compound solid electrolyte membrane).

The sandwich-structured polymer-based solid electrolytes of Examples 2~3 and Comparative Examples 1~3 are prepared following the procedure in Example 1. Comparative Example 4 is a commercially available membrane purchased from Shenzhen Senior Material Technology Co., Ltd.

Table 1 summarizes the component types and mass percentage (content) of each component in each solid electrolyte layer of each example and comparative example.

**Table 1**

| | | Example 1 | Example 2 | Example 3 | Comparative Example 1 | Comparative Example 2 | Comparative Example 3 |
|---|---|---|---|---|---|---|---|
| First Solid Electrolyte Layer | Polymer Type and Content | P(VDF-TrFE-CTFE), 47.6% | P(VDF-TrFE-CTFE), 47.6% | P(VDF-TrFE-CTFE), 47.6% | P(VDF-TrFE-CTFE), 90% | P(VDF-TrFE-CTFE), 90% | P(VDF-TrFE-CTFE), 47.6% |
| | Inorganic Filler Type and Content | LATP, 47.6% | LATP, 47.6% | LATP, 47.6% | / | / | LATP, 47.6% |
| | Lithium Salt Content | LiTFSI, 4.8% | LiTFSI, 4.8% | LiTFSI, 4.8% | LiTFSI, 10% | LiTFSI, 10% | LiTFSI, 4.8% |
| Second Solid Electrolyte Layer | Polymer Type and Content | P(VDF-TrFE-CTFE), 47.6% | P(VDF-TrFE-CTFE), 47.6% | P(VDF-TrFE-CTFE), 47.6% | P(VDF-TrFE-CTFE), 90% | P(VDF-TrFE-CTFE), 47.6% | P(VDF-TrFE-CTFE), 47.6% |
| | Inorganic Filler Type and Content | Al₂O_{3,} 47.6% | Al₂O₃, 47.6% | Al₂O₃, 47.6% | / | Al₂O₃, 47.6% | Al₂O₃, 47.6% |
| | Lithium Salt Content | LiTFSI, 4.8% | LiTFSI, 4.8% | LiTFSI, 4.8% | LiTFSI, 10% | LiTFSI, 4.8% | LiTFSI, 4.8% |
| Third Solid Electrolyte Layer | Polymer Type and Content | P(VDF-TrFE-CTFE), 32.3% | P(VDF-TrFE-CTFE), 32.3% | P(VDF-TrFE-CTFE), 32.3% | P(VDF-TrFE-CTFE), 32.3% | P(VDF-TrFE-CTFE), 32.3% | P(VDF-TrFE-CTFE), 32.3% |
| | Inorganic Filler 1 Type and Content | Al₂O₃ with particle size of 300 nm, 32.3% | Al₂O₃ with particle size of 100 nm, 32.3% | Al₂O₃ with particle size of 10 nm, 32.3% | Al₂O₃ with particle size of 300 nm, 64.6% | Al₂O₃ with particle size of 300 nm, 64.6% | Al₂O₃ with particle size of 300 nm, 64.6% |
| | Inorganic Filler 2 Type and Content | Al₂O₃ with particle size of 5,000 nm, 32.3% | Al₂O₃ with particle size of 1,000nm, 32.3% | Al₂O₃ with particle size of 1,000nm, 32.3% | / | / | / |
| | Lithium Salt Content | LiTFSI, 3.1% | LiTFSI, 3.1% | LiTFSI, 3.1% | LiTFSI, 3.1% | LiTFSI, 3.1% | LiTFSI, 3.1% |

### Experimental Example 1

1. The following parameters are tested in the above Examples and Comparative Examples:
   1) Thickness of the sandwich-structured polymer-based solid electrolyte, the first solid electrolyte layer, the second solid electrolyte layer, and the third solid electrolyte layer: using a membrane thickness gauge for test, namely using the membrane thickness gauge to clamp the sandwich-structured polymer-based solid electrolyte or the separated first, second, and third solid electrolyte layers to test the thickness. Specific results are shown in Tables 2 and 3.
   2) Nail penetration strength of the sandwich-structured polymer-based solid electrolyte and the first, second, and third solid electrolyte layers: first, cutting a sample with a diameter of 100 mm, including the sandwich-structured polymer-based solid electrolyte, the separated first solid electrolyte layer, the separated second solid electrolyte layer, or the separated third solid electrolyte layer, wherein the sample should have uniform thickness without wrinkles, creases, stains, or other obvious defects; then selecting 90° peel strength test and puncturing the sample at a speed of (50±5) mm·min⁻¹ to obtain the puncture force value. Each group of samples has five test pieces, and the final test result of the nail penetration strength is obtained by calculating the arithmetic mean of these 5 test pieces. The specific results are shown in Tables 2 and 3.
   3) Thermal shrinkage rate of the sandwich-structured polymer-based solid electrolyte (solid electrolyte): cutting out a 10cm×10cm square solid electrolyte sample, laying it flat between two transparent and clean glass plates, then placing the glass plates into an air-blasting drying oven that has reached a set temperature for baking for 1 hour. After baking, the glass plates are cooled to room temperature, and the morphological changes of the square solid electrolyte sample are observed and measured, wherein, the test temperature point, i.e. the set temperature of the above air-blasting drying oven, is 120°C, and the baking time is 1 hour. The formula for calculating the thermal shrinkage rate S is: S/% = (S0 - S1) / S0 × 100%, in which S is the thermal shrinkage rate, S0 is the area of the square solid electrolyte sample cut before heat treatment (baking), S1 is the area of the square solid electrolyte sample after heat treatment (baking), in units of mm². The specific results are shown in Table 3.
   4) Ionic conductivities of the sandwich-structured polymer-based solid electrolyte and the first, second, and third solid electrolyte layers: ionic conductivity is obtained by measuring the impedance thereof via electrochemical impedance spectroscopy (EIS) and then calculating by a formula. The specific test method is as follows: assembling circular stainless steel sheet (SS)/polymer electrolyte/SS blocking battery in a glove box, wherein the test temperature is 25°C, the temperature should be kept constant for more than 2 hours before the test, the test frequency is 1MHz-0.1Hz, and the amplitude voltage is 3mV; using Autolab Swiss Wanhua electrochemical workstation to perform the test, with the measured graph being a semicircle and a straight line with a slope of approximately 45°, wherein the value of the real-part impedance of the intersection point between the semicircle and the straight line is the body resistance Rb of the electrolyte membrane, and the ionic conductivity can be obtained by calculation according to the following formula: σ = L/(Rb*S), where: σ is the ionic conductivity of the test sample (e.g., a sandwich-structured polymer-based solid electrolyte membrane), in units of S/cm; L is the thickness of the test sample, in units of cm; Rb is the body resistance of the test sample, in units of Ω; S is the area of the test sample, in units of cm². Specific results are shown in Tables 2 and 3.
   5) Porosity of the sandwich-structured polymer-based solid electrolyte and the first, second, and third solid electrolyte layers: using a surface area analyzer (equipment model: Nova 1200, Quantachrome Instruments, USA), to test with nitrogen gas. Specific results are shown in Tables 2 and 3.

### 2. Test Results

**Table 2 Thickness, nail penetration strength, ionic conductivity, and porosity of the first, second, and third solid electrolyte layers**

| Sample | First Solid Electrolyte Layer | | | | Second Solid Electrolyte Layer | | | | Third Solid Electrolyte Layer (Middle Layer) | | | |
|---|---|---|---|---|---|---|---|---|---|---|---|---|
| | Thic knes s (µm) | Nail Penetrat ion Strengt h | Ionic Conduct ivity S/cm | Poro sity | Thickn ess (µm) | Nail Penetrat ion Strength | Ionic Conducti vity | Poros ity | Thickn ess (µm) | Nail Penetrat ion Strength | Ionic Conducti vity | Poros ity |
| Example 1 | 8 | 454 | 1.1*10⁻⁴ | 39% | 8 | 483 | 1.45*10⁻⁴ | 41% | 8 | 500 | 3.3*10⁻⁴ | 37% |
| Example 2 | 12 | 443 | 1.3*10⁻⁴ | 41% | 12 | 461 | 1.2*10⁻⁴ | 38% | 12 | 510 | 3.1*10⁻⁴ | 39% |
| Example 3 | 15 | 477 | 1.0*10⁻⁴ | 39% | 15 | 491 | 1.1*10⁻⁴ | 38% | 15 | 513 | 2.8*10⁻⁴ | 40% |
| Comparative Example 1 | 8 | 420 | 0.6*10⁻⁴ | 37% | 8 | 424 | 0.6*10⁻⁴ | 40% | 8 | 509 | 1.8*10⁻⁴ | 36% |
| Comparative Example 2 | 12 | 412 | 0.5*10⁻⁴ | 38% | 12 | 475 | 1.2*10⁻⁴ | 39% | 12 | 499 | 1.6*10⁻⁴ | 38% |
| Comparative Example 3 | 15 | 433 | 0.7*10⁻⁴ | 38% | 15 | 461 | 1.3*10⁻⁴ | 39% | 15 | 512 | 1.6*10⁻⁴ | 37% |

**Table 3 Thickness, ionic conductivity, density, and thermal shrinkage rate of the sandwich-structured polymer-based solid electrolyte**

| | Thickness (µm) | Nail Penetration Strength (N/m) | Thermal Shrinkage Rate | Ionic Conductivity | Porosity |
|---|---|---|---|---|---|
| Example 1 | 15 | 539 | 0.5% | 2.2*10⁻⁴ | 41% |
| Example 2 | 25 | 535 | 0.9% | 1.6*10⁻⁴ | 44.65% |
| Example 3 | 32 | 572.4 | 0.8% | 1.5*10⁻⁴ | 37.7% |
| Comparative Example 1 | 15 | 480 | 1.2% | 0.9*10⁻⁴ | 43.3% |
| Comparative Example 2 | 25 | 488 | 1.0% | 1.2*10⁻⁴ | 41.7% |
| Comparative Example 3 | 32 | 501 | 0.9% | 1.6*10⁻⁴ | 40.97% |

### Data Analysis:

It can be seen from the analysis of tables 2 and 3 that the sandwich-structured polymer-based solid electrolyte in the examples of the present invention exhibits high nail penetration strength and low thermal shrinkage rate.

### Experimental Example 2

The sandwich-structured polymer-based solid electrolytes, positive electrode plates and negative electrode plates in all examples and comparative examples are stacked, pressed, packaged in an aluminum pouch, and added with a gel-state additive, which is purchased from Sinopharm Group, for in-situ curing, so as to be assembled into a solid-state battery, specifically, the assembly of the battery cells that include the steps such as stacking, encapsulating, liquid injection, and formation is included to ultimately form a complete pouch battery.

Wherein, the preparation processes for the positive electrode plate and the negative electrode plate are as follows:
Preparation of the positive electrode plate: uniformly mixing the LFP positive electrode material, the carbon black conductive agent, and the PVDF binder, to form a slurry with good conductivity and adhesivity; coating the prepared slurry onto an aluminum foil current collector, typically with a coating machine; drying the coated aluminum foil to remove the solvent, so that the solid components in the slurry is solidified, obtaining the dried positive electrode plate; compacting the dried positive electrode plate through a rolling process to improve the volumetric energy density of the battery, obtaining the positive electrode plate.
Preparation of the negative electrode plate: uniformly mixing the graphite negative electrode material, the carbon black conductive agent, and the PVDF binder, to form a negative electrode slurry; coating the negative electrode slurry onto the copper foil current collector, drying and rolling to obtain the negative electrode plate.

### Tests of the cycle performances of the above solid-state batteries:

The capacity retention rate of each obtained solid-state battery is tested with the following specific test method: allowing the solid-state battery to stand at 45°C for 5 hours, then charging it to 3.65V at a constant power of 1P, allowing the solid-state battery to stand for 15 minutes, then discharging it to 2.50V at a constant power of 1P, allowing the solid-state battery to stand for 15 minutes; repeating this charge-discharge cycle 500 times; measuring the discharge energy Q₁ at the first cycle and the discharge energy Q₅₀₀ at the 500^{th} cycle; and calculating the discharge energy retention rate Q after 500 cycles according to the following formula: Q = Q₅₀₀/Q₁ * 100%.

Cycle Life: the battery cycle life is evaluated using the capacity decay rate method. The cycle life of the battery is defined as the number of charge-discharge cycles performed under normal operating conditions until the battery's capacity drops to 80% or less of its rated capacity. Furthermore, the battery's decay rate and remaining life are evaluated by calculating the capacity loss rate of the battery in each charge-discharge cycle and plotting a capacity decay curve.

**Table 4. Battery Cycle Performance**

| Example/Comparative Example | Discharge Energy Retention Rate after 500 Cycles at 45°C | Cycle life prediction (the number of charge-discharge cycles until battery's capacity drops to 80% or less of its rated capacity) |
|---|---|---|
| Example 1 | 92.9% | 1900 |
| Example 2 | 91.57% | 1400 |
| Example 3 | 91.86% | 1400 |
| Comparative Example 1 | 89.63% | 1000 |
| Comparative Example 2 | 89.49% | 1200 |
| Comparative Example 3 | 89.31% | 1200 |

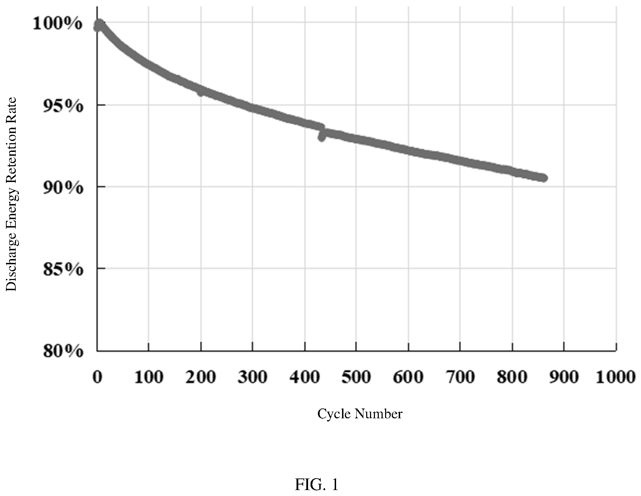

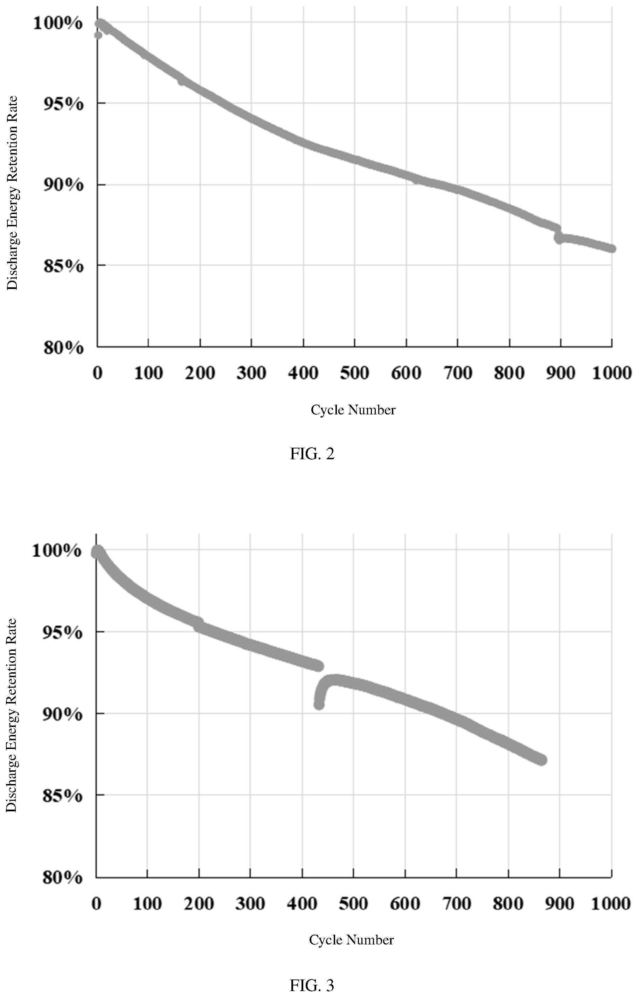

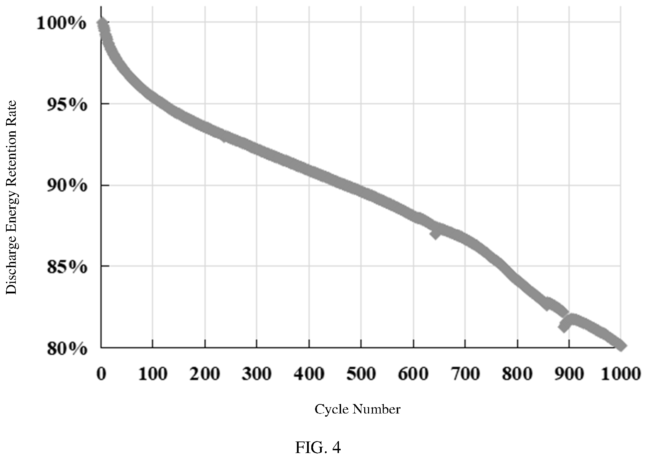

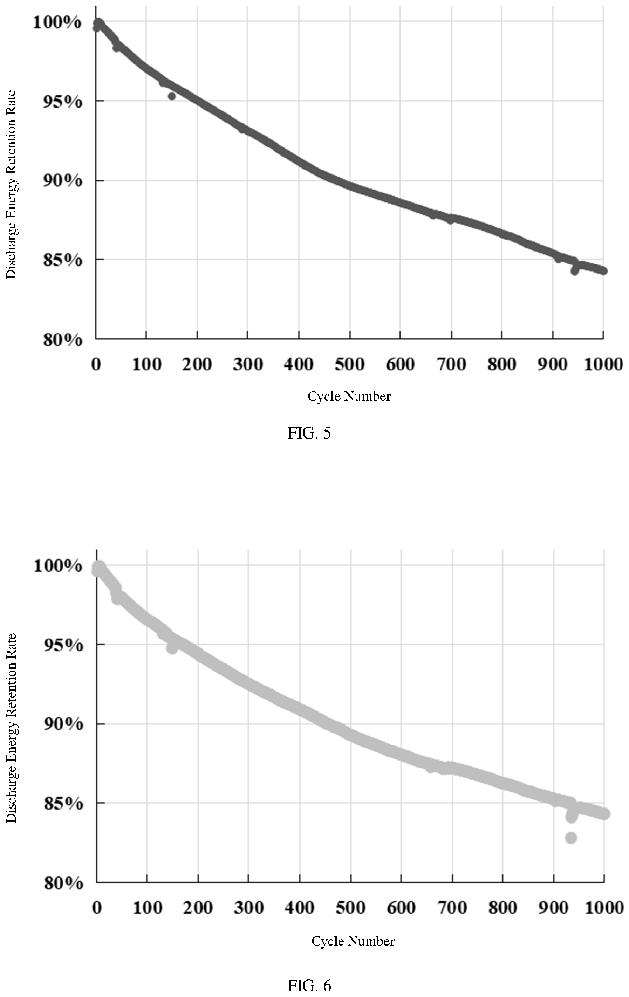

It can be seen in conjunction with Figs. 1-6 and table 4 that the sandwich-structured polymer-based solid electrolyte provided in examples of the present invention exhibits good cycle stability.

Finally, it should be noted that the above examples are only used to illustrate the technical solutions of the present invention and are not intended to limit the present invention. Although the present invention has been described in detail with reference to the foregoing examples, those of ordinary skills in the art should understand that modifications can still be made to the technical solutions described in the foregoing examples, or equivalent replacements can be made to some or all of the technical features therein; and these modifications or replacements do not cause the essence of the corresponding technical solutions to deviate from the scope of the technical solutions of the examples of the present invention.

## Claims

1. A sandwich-structured polymer-based solid electrolyte, **characterized in that**, said solid electrolyte comprises a first solid electrolyte layer, a second solid electrolyte layer, and a third solid electrolyte layer located between the first solid electrolyte layer and the second solid electrolyte layer;
the inorganic filler content of the third solid electrolyte layer is higher than the inorganic filler content of the first solid electrolyte layer;
the inorganic filler content of the third solid electrolyte layer is higher than the inorganic filler content of the second solid electrolyte layer; and
the inorganic filler in the third solid electrolyte layer includes a first inorganic filler and a second inorganic filler, and the particle size of the first inorganic filler is smaller than the particle size of the second inorganic filler.

2. The sandwich-structured polymer-based solid electrolyte according to claim 1, **characterized in that** the ratio of the particle size of the first inorganic filler to the particle size of the second inorganic filler is 1:(1~1000), and the ratio of the particle size of the first inorganic filler to the particle size of the second inorganic filler is not 1.

3. The sandwich-structured polymer-based solid electrolyte according to claim 2, **characterized in that** the particle size of the first inorganic filler is 10~500 nm, and the particle size of the second inorganic filler is 1~10 µm.

4. The sandwich-structured polymer-based solid electrolyte according to claim 3, **characterized in that** the mass ratio of the first inorganic filler to the second inorganic filler is (1~2):(2~10).

5. The sandwich-structured polymer-based solid electrolyte according to claim 1, **characterized in that**,
the first solid electrolyte layer comprises, by mass percentage, 40% to 100% of a first polymer, 0% to 60% of the inorganic filler, and 1% to 10% of a first lithium salt;
the second solid electrolyte layer comprises, by mass percentage, 40% to 100% of a third polymer, 0% to 60% of the inorganic filler, and 1% to 10% of a third lithium salt;
the third solid electrolyte layer comprises, by mass percentage, 25% to 100% of a second polymer, 0% to 75% of the inorganic filler, and 1% to 10% of a second lithium salt.

6. The sandwich-structured polymer-based solid electrolyte according to claim 1, **characterized in that**,
the inorganic filler includes one or more of lithium aluminum titanium phosphorus oxide, lithium lanthanum zirconium oxide, lithium lanthanum titanium oxide, lithium lanthanum zirconium titanium oxide, alumina, silicon oxide, hafnium oxide, and barium titanate;
and/or, the first inorganic filler and the second inorganic filler each independently include one or more of alumina, silicon oxide, hafnium oxide, and barium titanate.

7. A preparation method for the sandwich-structured polymer-based solid electrolyte according to any of claims 1-6, **characterized in that**, said method comprises:
mixing the first polymer, the inorganic filler, the first lithium salt, and a first solvent, and then performing a first grinding to obtain a first solid electrolyte slurry; coating the first solid electrolyte slurry onto a substrate, and then performing a first drying to obtain a first solid electrolyte layer;
mixing the second polymer, the inorganic filler, the second lithium salt, and a second solvent, and then performing a second grinding to obtain a second solid electrolyte slurry; coating the second solid electrolyte slurry onto the substrate, and then performing a second drying to obtain the second solid electrolyte layer;
mixing the third polymer, the first inorganic filler, the second inorganic filler, the third lithium salt, and a third solvent to obtain a third solid electrolyte slurry; coating the third solid electrolyte slurry onto the substrate, and then performing a third drying to obtain the third solid electrolyte layer; the sum of the addition amounts of the first inorganic filler and the second inorganic filler is higher than the addition amount of inorganic filler in the first solid electrolyte layer, and the sum of the addition amounts of the first inorganic filler and the second inorganic filler is higher than the addition amount of inorganic filler in the second solid electrolyte layer; and
sequentially stacking the first solid electrolyte layer, the third solid electrolyte layer, and the second solid electrolyte layer and pressing them at 80~120 MPa and 160~200°C to obtain the sandwich-structured polymer-based solid electrolyte.

8. The preparation method according to claim 7, **characterized in that**,
during the first grinding process, the grinding is first performed at a rotation speed of 80 to 120 rpm for 8~12 minutes, then the grinding is performed at a rotation speed of 480 to 520 rpm for 18~22 minutes, and finally the grinding is performed at a rotation speed of 780 to 820 rpm for 38~42 minutes;
and/or, the process of coating the first solid electrolyte slurry onto the substrate and then performing a first drying to obtain the first solid electrolyte layer includes: removing air bubbles from the first solid electrolyte slurry, and then coating 8~12 mL of the first solid electrolyte slurry, air bubbles of which have been removed, onto the substrate with a planar area of 380~420 cm², and performing the first drying at 58~62°C to obtain the first solid electrolyte layer;
and/or during the second grinding process, the grinding is first performed at a rotation speed of 80 to 120 rpm for 8~12 minutes, then the grinding is performed at a rotation speed of 480 to 520 rpm for 18~22 minutes, and finally the grinding is performed at a rotation speed of 780 to 820 rpm for 38~42 minutes;
and/or, the process of coating the second solid electrolyte slurry onto the substrate and then performing the second drying to obtain the second solid electrolyte layer includes: removing air bubbles from the second solid electrolyte slurry, and then coating 8~12 mL of the second solid electrolyte slurry, air bubbles of which have been removed, onto the substrate with a planar area of 380~420 cm², performing the second drying at 58~62°C to obtain the second solid electrolyte layer;
and/or, the process of coating the third solid electrolyte slurry onto the substrate and then performing a third drying to obtain the third solid electrolyte layer includes: removing air bubbles from the third solid electrolyte slurry, and then coating 8~12 mL of the third solid electrolyte slurry, air bubbles of which have been removed, onto the substrate with a planar area of 380~420 cm², and performing the third drying at 58~62°C to obtain the third solid electrolyte layer.

9. The preparation method according to claim 7, **characterized in that**,
the first polymer, the second polymer, and the third polymer each independently comprise one or more of polyvinylidene fluoride, polyvinylidene fluoride-hexafluoropropylene copolymer, polyvinylidene fluoride-trifluoroethylene-chlorotrifluoroethylene terpolymer, and polyvinylidene fluoride-trifluoroethylene copolymer;
and/or, the first lithium salt, the second lithium salt, and the third lithium salt each independently comprise one or more of lithium bis(trifluoromethanesulfonyl)imide and lithium hexafluorophosphate.

10. A solid-state battery, **characterized in that**, said battery comprises the sandwich-structured polymer-based solid electrolyte according to any of claims 1-6 or the sandwich-structured polymer-based solid electrolyte obtained according to the preparation method according to any of claims 7-9.
